# EUROPÄISCHE PATENTSCHRIFT

(11) **EP 1 582 189 B1**
(45) Veröffentlichungstag und Bekanntmachung des Hinweises auf die Patenterteilung: **30.07.2008**
(21) Anmeldenummer: 05003834.8
(22) Anmeldetag: 23.02.2005
(51) Int. Cl.: A61G 5/04, A61G 5/00

(54) **Zerlegbarer Elektrorollstuhl**
Dismountable electric wheelchair
Fauteuil roulant électrique démontable

(30) Priorität: 30.03.2004 DE 102004015603
(43) Veröffentlichungstag der Anmeldung: 05.10.2005
(73) Patentinhaber: Otto Bock HealthCare GmbH, 37115 Duderstadt (DE)
(72) Erfinder: Haas, Wolfgang, 74193 Schwaigern (DE); Kretschmer, Oliver, 74889 Sinsheim (DE); Brendel, Thomas, 74889 Sinsheim (DE)
(74) Vertreter: Rehmann, Thorsten

(56) Entgegenhaltungen:
- DE-U1- 29 903 620
- US-B1- 6 176 337

## Beschreibung

Die Erfindung betrifft einen Elektrorollstuhl mit einer Sitz- und Rahmeneinheit, einem lösbar mit der Sitz- und Rahmeneinheit verbundenen Antriebssystem und mindestens einem mit dem Antriebssystem lösbar verbundenen Akkumulator, wobei die Sitz- und Rahmeneinheit und das Antriebssystem sowie das Antriebssystem und der Akkumulator zueinander verriegelbar sind.

Eine Anforderung an Elektrorollstühle ist die Möglichkeit des Transports und die Mitnahme mittels Pkw bzw. anderer Transportsysteme auch bei kleinem Raum-angebot. Dabei können die Rollstühle in handliche Einzelkomponenten zerlegt werden. Hierzu kann die Sitz- und Rahmeneinheit vom Antriebssystem, das die angetriebenen Räder, die Motoren und die Batterien (Akkumulatoren) aufnimmt, gelöst werden. Die Batterien können aus dem Antriebssystem herausgenommen werden. Gegebenenfalls lässt sich die Sitz- und Rahmeneinheit dann noch weiter zerlegen oder beispielsweise zusammenfalten, wenn die Einzelteile möglichst wenig Platz beanspruchen sollen. Im zusammengebauten Zustand müssen die zerlegbaren Teile gegeneinander verriegelt sein, um ein unbeabsichtigtes Lösen der Verbindung zu verhindern. Hierzu sind die einzelnen Komponenten mit jeweils einem eigenen Verriegelungssystem gesichert, so dass der Anwender eine Vielzahl von Verriegelungen bedienen muss. Der Vorgang des Zerlegens bzw. des Zusammenbaus ist entsprechend mühsam und schwierig bzw. zeitaufwändig.

Aus der US-B1-6,176,337 ist ein Rollstuhl bekannt, dessen Antriebssystem über einen zentralen Hebel mit der Sitz- und Rahmeneinheit verbunden werden kann. Das Antriebssystem umfasst Elektromotoren, die Antriebsräder und die in einem Gehäuse aufgenommenen Akkumulatoren. Die Akkumulatoren werden innerhalb des Gehäuses in einer Pfanne gehalten. Eine Verriegelung der Akkumulatoren mit der Rahmen- und Sitzeinheit erfolgt nicht.

Aus der DE-U1-299 03 620 ist ein zerlegbarer Rollstuhl bekannt, der im Wesentlichen drei miteinander verbindbare Teile enthält, nämlich ein Vorderrad-Teilchassis, ein leichtgewichtiges Hauptchassis, das die Hinterräder trägt und ein Sitzteil. Die Konstruktion ist auch für selbst angetriebene Rollstühle geeignet, da die Batterie vollkommen unterhalb des Sitzes aufgenommen werden kann. Die Hinterräder können dann durch individuelle Getriebemotoren angetrieben werden.

Von dieser Problemstellung ausgehend soll der eingangs beschriebene Elektrorollstuhl dahingehend verbessert werden, dass er einfach und schnell zerlegt bzw. zusammengebaut werden kann.

Zur Problemlösung zeichnet sich ein gattungsgemäßer Elektrorollstuhl durch einen zentral angeordneten Hebel aus, mittels dessen die Verriegelung zwischen Sitz- und Rahmeneinheit und Antriebssystem sowie Antriebssystem und Akkumulator gleichzeitig herbeiführbar ist.

Durch diese Ausgestaltung können die einzelnen Komponenten zusammengebaut werden und mit einem einzigen Handgriff gemeinsam verriegelt werden. Zum Zerlegen des Rollstuhls können alle Verriegelungen mit einem einzigen Handgriff wieder gelöst werden.

Zur Vereinfachung der Verriegelung ist der Hebel vorzugsweise schwenkbar im Antriebssystem gelagert.

Der Hebel wird vorzugsweise gebildet durch zwei zueinander beabstandete über eine Querstange verbundene Schwenkglieder, die an ihren von der Querstange abgewandten Enden Andruckrollen und an den mit der Querstange verbundenen Enden Verriegelungszapfen aufweisen, wobei durch Verschwenken des Hebels die Verriegelungszapfen in Eingriff mit Ausklinkungen in der Sitz- und Rahmeneinheit und die Andruckrollen in Eingriff mit dem Akkumulator gelangen.

Durch diese Ausgestaltung kann die Bedienperson an der Querstange anfassen und den Hebel verschwenken. Nach oben erfolgt die Verriegelung mit der Sitz- und Rahmeneinheit und nach unten drückt der Hebel auf die Akkumulatoren und fixiert diese im Antriebssystem.

Um ein unbeabsichtigtes Verschwenken des Hebels zu verhindern, sind die Schwenkglieder mit Riegelbolzen versehen, die in in der Antriebseinheit vorgesehene Ausnehmungen eingreifen.

Vorzugsweise sind die Riegelbolzen federbelastet und insbesondere vorzugsweise mit den gegenüberliegenden Enden eines Gurtes verbunden. Wird am Gurt gezogen, werden beide Riegelbolzen gleichzeitig gegen die Kraft der Feder gezogen und kommen außer Eingriff mit den in der Antriebseinheit vorgesehenen Ausnehmungen, so dass der Hebel verschwenkt werden kann. Wird der Rollstuhl später zusammengesetzt, laufen die Riegelbolzen beim Verschwenken des Riegels an entsprechende Anlaufschrägen an, werden gegen die Feder zusammengedrückt und rasten dann, wenn sie in Überdeckung mit den Ausnehmen kommen, selbsttätig ein, so dass die Sicherung hergestellt ist.

Mit Hilfe einer Zeichnung soll ein Ausführungsbeispiel der Erfindung nachfolgend näher beschrieben werden. Es zeigt:

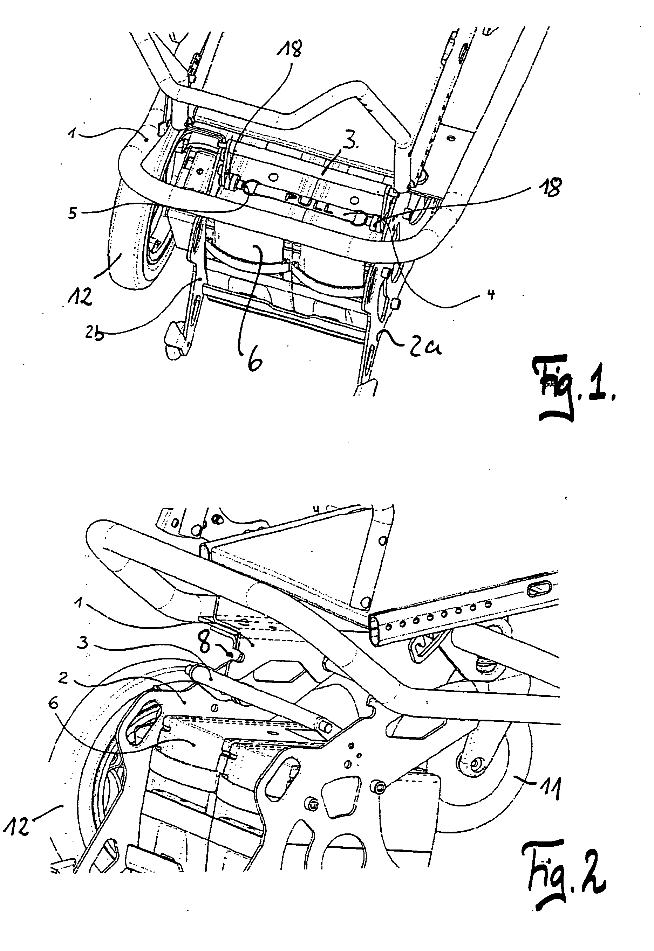

- Figur 1 -: die perspektivische Teilansicht eines Elektrorollstuhls;
- Figur 2 -: den Rollstuhl nach Figur 1 aus einer anderen Perspektive in Teildarstellung;
- Figur 3 -: die Darstellung nach Figur 2 mit getrennter Sitz- und Rahmeneinheit und Antriebssystem;
- Figur 4 -: die Darstellung nach Figur 3 mit gelösten Akkumulatoren;
- Figur 5 -: einen Längsschnitt mittig durch den Rollstuhl;
- Figur 6 -: den Schnitt entlang der Linie VI-VI nach Figur 5 in Ausschnittsdarstellung.

Der Rollstuhl besteht im wesentlichen aus der Sitz- und Rahmeneinheit 1 und der damit lösbar verbundenen Antriebseinheit 2. An der Sitz- und Rahmeneinheit 1 sind neben dem Sitz 10 die Vorderräder 11 angeordnet. Die Antriebseinheit 2 trägt die hier nicht näher dargestellten Antriebsmotoren, die Hinterräder 12 und zwei Akkumulatoren 6. An den gegenüberliegenden Seiten ist die Sitz- und Antriebseinheit 1 an ihrem (bezogen auf die Fahrtrichtung des Rollstuhls) hinteren Ende mit jeweils einer Klinke 7 versehen, die Ausklinkungen 8 aufweist. Über die Klinken 7 bzw. die Ausklinkungen 8 wird die Sitz- und Rahmeneinheit 1 mit dem Antriebssystem 2 verbunden.

Das Antriebssystem 2 ist rahmenförmig ausgebildet und weist zwei gegenüberliegende Wangen 2a, 2b, die oben über eine Querstange 9 und unten über ein wannenförmig gebogenes Blech 13 verbunden sind, auf. Das Blech 13 trägt die beiden Akkumulatoren 6. Durch die wannenförmige Ausgestaltung sind die Akkumulatoren gegen Verrutschen gesichert. Zwischen den Wangen 2a, 2b ist ein Verriegelungshebel 3 schwenkbar gelagert. Der Verriegelungshebel 3 besteht aus den Schwenkgliedern 3b, die über eine Querstange 3a miteinander verbunden sind. Die Querstange 3a ist an ihren Enden mit Verriegelungszapfen 14 versehen. Über jeweils einen in den Wangen 2a, 2b eingesetzten Zapfen 15 sind die Schwenkglieder 3b schwenkbar gelagert. An ihrem der Querstange 3a gegenüberliegenden Ende sind die Schwenkglieder 3b mit einem Riegelbolzen 5 versehen, der in einer Hülse 16 gegen die Kraft einer Druckfeder 17 verschiebbar gelagert ist. Auf die Hülse 16 sind Andruckrollen 18 aufgeschoben. In den Wangen 2a, 2b sind Löcher 19 vorgesehen, in die die Riegelbolzen 5 eingreifen. Die Enden der Riegelbolzen 5 sind aus dem Boden der Hülse 16 herausgeführt und mit den Enden eines Gurtes 4 verbunden. Wird am Gurt 4 gezogen, werden die Riegelbolzen 5 gegen die Kraft der Druckfedern 17 in die Hülsen 16 hineingezogen und kommen so außer Eingriff mit den Löchern 19 in den Wangen 2a, 2b, und es ist möglich, den Hebel 3 um die Zapfen 15 zu schwenken.

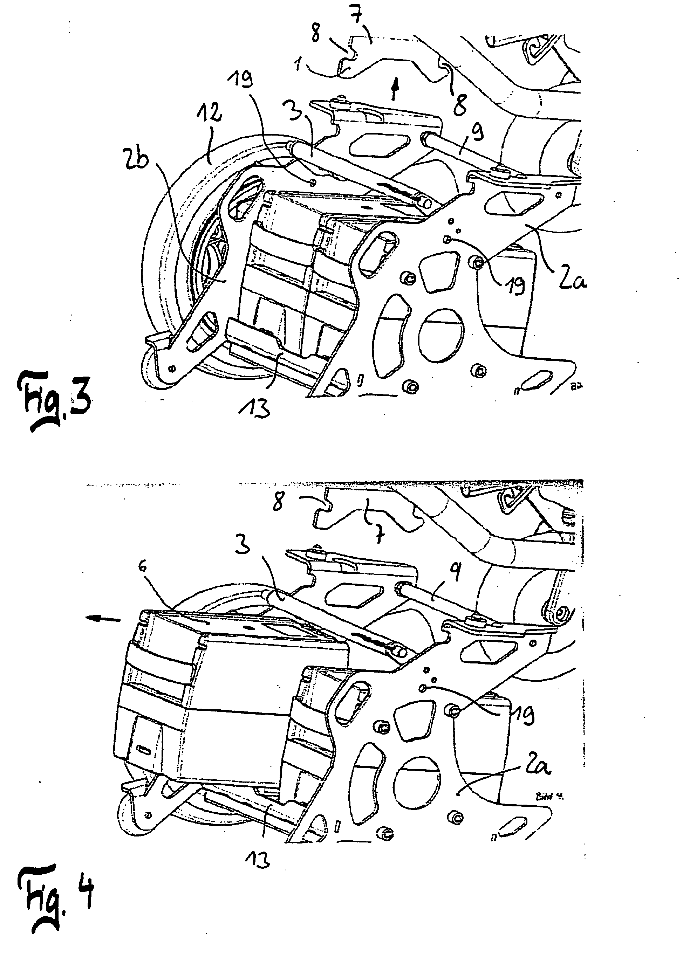

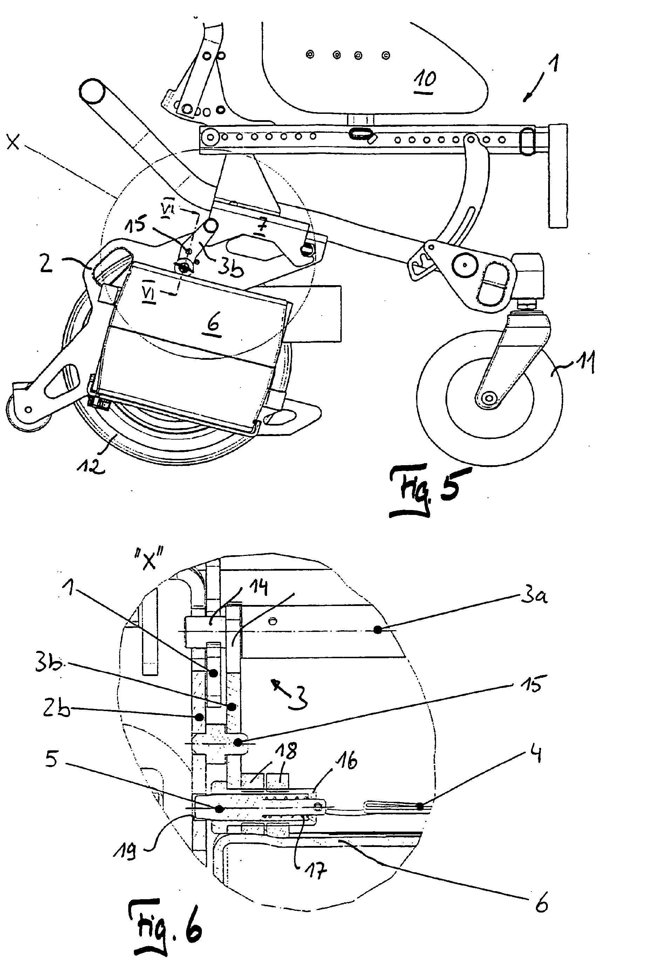

Figuren 5 und 6 zeigen den Rollstuhl in der verriegelten Position von Sitz- und Rahmeneinheit 1 mit der Antriebseinheit 2 und den Akkumulatoren 6. Wird der Hebel geschwenkt, kommen die Zapfen 14 der Querstange 3 außer Eingriff mit der Ausklinkung 8 der an der Sitz- und Rahmeneinheit 1 vorgesehenen Klinken 7. Die Andruckrollen 18, die von oben auf die Akkumulatoren 6 drücken, schwenken von diesen fort, so dass die Akkumulatoren 6 aus der Antriebseinheit 2 nach hinten entfernt werden können (vgl. Figur 4). Zum Entfernen der Sitz- und Rahmeneinheit 1 von der Antriebseinheit 2 wird die vordere Ausklinkung 8 von der Querstange 9 gelöst.

Der Zusammenbau des zerlegten Rollstuhls erfolgt in umgekehrter Reihenfolge. Durch Umlegen des Hebels 3 erfolgt dann gleichzeitig die Verriegelung der Sitz- und Rahmeneinheit 1 mit der Antriebseinheit 2 und der Verriegelung der Akkumulatoren 6 in der Antriebseinheit 2, indem diese über die Andruckrollen 18 in die Wanne 13 gepresst werden.

### Bezugszeichenliste

- 1: Sitz- und Rahmeneinheit
- 2: Antriebseinheit
- 2a: Wange
- 2b: Wange
- 3: Hebel
- 3a: Querstange
- 3b: Schwenkglied
- 3c: Andruckrolle
- 4: Gurt
- 5: Riegelbolzen
- 6: Akkumulator
- 7: Klinke
- 8: Ausklinkung
- 9: Querstange
- 10: Sitz
- 11: Vorderrad
- 12: Hinterrad
- 13: Wanne/Blech
- 14: Verriegelungszapfen
- 15: Zapfen
- 16: Hülse
- 17: Druckfeder
- 18: Andruckrolle
- 19: Loch
Re/bk

## Patentansprüche

1. Elektrorollstuhl mit einer Sitz- und Rahmeneinheit (1), einem lösbar mit der Sitz- und Rahmeneinheit (1) verbundenen Antriebssystem (2) und mindestens einem mit dem Antriebssystem (2) lösbar verbundenen Akkumulator (6), wobei die Sitz- und Rahmeneinheit (1) und das Antriebssystem (2) sowie das Antriebssystem (2) und der Akkumulator (6) zueinander verriegelbar sind, **gekennzeichnet durch** einen zentral angeordneten Hebel (3) mittels dessen die Verriegelung zwischen Sitz- und Rahmeneinheit (1)/Antriebssystem (2) und Antriebssystem (2)/Akkumulator (6) gleichzeitig herbeiführbar ist.

2. Elektrorollstuhl nach Anspruch 1, **dadurch gekennzeichnet, dass** der Hebel (3) schwenkbar im Antriebssystem (2) gelagert ist.

3. Elektrorollstuhl nach Anspruch 2, **dadurch gekennzeichnet, dass** der Hebel (3) gebildet wird durch zwei zueinander beabstandete über eine Querstange (3a) verbundene Schwenkglieder (3b), die an ihren von der Querstange abgewandten Enden Andruckrollen (3c) und an den mit der Querstange (3a) verbundenen Enden Verriegelungszapfen (14) aufweisen, wobei durch Verschwenken des Hebels (3) die Verriegelungszapfen (14) in Eingriff mit Ausklinkungen (8) in der Sitz- und Rahmeneinheit (1) und die Andruckrollen (3c) in Eingriff mit dem Akkumulator (6) gelangen.

4. Elektrorollstuhl nach Anspruch 3, **dadurch gekennzeichnet, dass** die Verriegelungszapfen (4) an den Enden der Querstange (3a) ausgebildet sind, die durch Bohrungen in den Schwenkgliedem (3) gesteckt sind.

5. Elektrorollstuhl nach Anspruch 3, **dadurch gekennzeichnet, dass** die Schwenkglieder (3b) mit Riegelbolzen (5) versehen sind, die in in der Antriebseinheit (2) vorgesehene Ausnehmungen (19) eingreifen, um den Hebel (3) in seiner Verriegelungslage zu blockieren.

6. Elektrorollstuhl nach Anspruch 5, **dadurch gekennzeichnet, dass** die Riegelbolzen (5) federbelastet sind.

7. Elektrorollstuhl nach Anspruch 6, **dadurch gekennzeichnet, dass** die Riegelbolzen (5) mit gegenüberliegenden Enden eines Gurtes (4) miteinander verbunden sind.

## Claims

1. An electric wheelchair having a seat and frame unit (1), a drive system (2) which is detachably connected to the seat and frame unit (1), and at least one rechargeable battery (6) which is detachably connected to the drive system (2), with the seat and frame unit (1) and the drive system (2) as well as the drive system (2) and the rechargeable battery (6) being lockable to one another, **characterized by** a centrally arranged lever (3) by means of which locking between the seat and frame unit (1)/drive system (2) and the drive system (2)/rechargeable battery (6) can be achieved at the same time.

2. An electric wheelchair according to claim 1, **characterized in that** the lever (3) is mounted in the drive system (2) such that it can pivot.

3. An electric wheelchair according to claim 2, **characterized in that** the lever (3) is formed by two pivoting elements (3b) which are at a distance from one another, are connected via a lateral rod (3a), have contact-pressure rollers (3c) at their ends remote from the lateral rod and have locking pins (14) at the ends connected to the lateral rod (3a), wherein the locking pins (14) can be made to engage with indents(8) in the seat and frame unit (1), and the contact-pressure rollers (3c) can be made to engage with the rechargeable battery (6), by pivoting the lever (3).

4. An electric wheelchair according to claim 3, **characterized in that** the locking pins (4) are formed at the ends of the lateral rod (3a) and are passed through holes in the pivoting elements (3).

5. An electric wheelchair according to claim 3, **characterized in that** the pivoting elements (3b) are provided with locking bolts (5) which engage in recesses (19) provided in the drive unit (2), in order to block the lever (3) in its locked position.

6. An electric wheelchair according to claim 5, **characterized in that** the locking bolts (5) are springloaded.

7. An electric wheelchair according to claim 6, **characterized in that** the locking bolts (5) are connected to one another by opposite ends of a strap (4).

## Revendications

1. Fauteuil roulant électrique avec une unité d'assise et de châssis (1), un système d'entraînement (2) relié de façon amovible à l'unité d'assise et de châssis (1) et au moins un accumulateur (6) relié de façon amovible au système d'entraînement (2), où l'unité d'assise et de châssis (1) et le système d'entraînement (2), comme le système d'entraînement (2) et l'accumulateur (6) sont verrouillables ensemble, **caractérisé par** un levier (3) agencé de façon centrale permettant de provoquer simultanément le verrouillage entre unité d'assise et de châssis (1)/système d'entraînement (2) et système d'entraînement (2)/accumulateur (6).

2. Fauteuil roulant électrique selon la revendication 1, **caractérisé en ce que** le levier (3) est monté pivotant dans le système d'entraînement (2).

3. Fauteuil roulant électrique selon la revendication 2, **caractérisé en ce que** le levier (3) est constitué de deux organes pivotants (3b) reliés à distance l'un de l'autre par une traverse (3a), qui comportent des galets-presseurs (3c) à leurs extrémités écartées de la traverse, et des doigts de verrouillage (14) aux extrémités reliées à la traverse (3a), où par pivotement du levier (3) les doigts de verrouillage (14) viennent en prise avec des encoches (8) dans l'unité d'assise et de châssis (1) et les galets-presseurs viennent en prise avec l'accumulateur (6).

4. Fauteuil roulant électrique selon la revendication 3, **caractérisé en ce que** les doigts de verrouillage (14) sont agencés aux extrémités de la traverse (3a) qui sont emmanchées dans des alésages formés dans les organes pivotants (3b).

5. Fauteuil roulant électrique selon la revendication 3, **caractérisé en ce que** les organes pivotants (3b) sont pourvus de doigts de verrouillage (5) qui viennent en prise dans des évidements (19) prévus dans l'unité d'entraînement (2) pour bloquer le levier (3) dans sa position de verrouillage.

6. Fauteuil roulant électrique selon la revendication 5, **caractérisé en ce que** les doigts de verrouillage (5) sont sollicités par ressort.

7. Fauteuil roulant électrique selon la revendication 6, **caractérisé en ce que** les doigts de verrouillage (5) sont reliés ensemble avec les extrémités opposées d'une lanière (4).
